# EUROPÄISCHE PATENTANMELDUNG

(11) **EP 4 556 663 A1**
(43) Veröffentlichungstag der Anmeldung: **21.05.2025**
(21) Anmeldenummer: 24212213.3
(22) Anmeldetag: 11.11.2024
(51) Int. Cl.: E05B 81/76, E05B 85/10, E05B 85/18

(54) **FAHRZEUGTÜR MIT EINEM AUSFAHRBAREN GRIFF**

(30) Priorität: 16.11.2023 DE 102023131992
(71) Anmelder: MINEBEA ACCESSSOLUTIONS ITALIA S.P.A., 10044 Pianezza (IT)
(72) Erfinder: CALOR, Hervé, 10044 Pianezza (IT); PIERI, Alexandre, 10044 Pianezza (IT); SHARMA, Sachin, 10044 Pianezza (IT); SHARMA, Manu, 10044 Pianezza (IT); SANDHU, Paramjeet, 10044 Pianezza (IT); KASTNER, Robert, 78267 Aach (DE); THIEL, Pascal, 78083 Dauchingen (DE)
(74) Vertreter: Prinz & Partner mbB

(57) **Zusammenfassung**

Fahrzeugtür (1), umfassend eine zu betätigende Fahrzeugtürverriegelung, welche mit einem Griff (2) zusammenwirkt, der so konfiguriert ist, dass er um eine Achse (4) schwenkt, welche im Wesentlichen in einer Längsrichtung des Fahrzeugs verläuft, sowie eine Aussparung (5) in einem Türaußenblech (6) für den Griff (2), wobei der Griff (2) durch einen Aktuator (7) in eine ausgefahrene Position oder in eine eingefahrene Position schwenkt, wobei die Aussparung (5) in einem Bereich eines Scheibenrahmens (100) angeordnet ist und der Griff (2) in der Aussparung (5) aufgenommen ist, wobei der Griff (2) in der eingezogenen Position mindestens teilweise hinter das Türaußenblech (6) schwenkt.

## Beschreibung

Die Erfindung betrifft eine Fahrzeugtür gemäß dem Patentanspruch 1.

Es ist bekannt, dass eine Fahrzeugtür mit einem Schließsystem ausgestattet ist, das mit einer in einem Griff des Fahrzeugs eingebauten mechanischen Vorrichtung ausgelöst werden kann. Normalerweise ergreift ein Bediener die am Griff befindliche mechanische Vorrichtung, um sie auszulösen. Der Bediener kann dann im gleichen Zug an der Fahrzeugtür ziehen, um sie zu öffnen. Dies ist insofern angenehm, als der Bediener die Fahrzeugtür intuitiv betätigen kann, da die mechanische Vorrichtung auf das Greifen des Griffs reagiert.

Einige Fahrzeuge sind mit einem in der Fahrzeugtür versenkten Griff ausgestattet. Diese Griffe ermöglichen einen besseren ästhetischen Effekt, da sie mit dem Rest der Fahrzeugtür verschmelzen und daher sehr diskret sind. Diese Art von Griffen ermöglicht es auch, die Aerodynamik des Fahrzeugs während der Fahrt zu verbessern, da sie bündig mit der Fahrzeugtür sind.

Diese versenkten Griffe gibt es in mechanischen und motorisierten Versionen.

Das Griffelement ist in Bezug auf einen Träger drehbar oder verschiebbar zwischen einer Ruhestellung, in der es im Wesentlichen parallel zum Träger angeordnet und in der Fahrzeugtür versenkt ist (oder bündig mit einer Außenfläche eines Türblatts abschließt), und einer Öffnungsstellung, in der es gegenüber der Fahrzeugtür geneigt und somit ausgefahren ist.

Aufgabe der Erfindung ist es, einen kompakten Griff am Fahrzeug anzugeben, welcher eine Verringerung des Luftwiderstands und der Turbulenzen erreicht sowie eine intuitivere Bedienung ermöglicht.

Diese Aufgabe wird durch eine Fahrzeugtür, umfassend eine zu betätigende Fahrzeugtürverriegelung, welche mit einem Griff zusammenwirkt, der so konfiguriert ist, dass er um eine Achse schwenkt, welche im Wesentlichen in einer Längsrichtung des Fahrzeugs verläuft sowie eine Aussparung in einem Türaußenblech für den Griff aufweist, wobei der Griff durch einen Aktuator in eine ausgefahrene Position oder in eine eingefahrene Position schwenkt, gelöst. Dazu ist die Aussparung in einem Bereich eines Scheibenrahmens angeordnet und der Griff in der Aussparung aufgenommen, wobei der Griff in der eingefahrenen Position mindestens teilweise hinter das Türaußenblech schwenkt. Durch die Anordnung des Griffs in dem Bereich des Scheibenrahmens, was mit anderen Worten bedeutet, die Aussparung ist im Scheibenrahmen vorgesehen, wirkt die Tür wie eine grifflose Tür, da im Bereich des Türaußenblechs, in dem Bereich wo üblicherweise die Griffe angeordnet sind, keine sichtbaren Fugen vorhanden sind, wie bei bekannten ausfahrbaren Griffen. Weiterhin ist die Position des Griffs intuitiver und es entstehen weniger Turbulenzen. Zusätzlich kann ein entsprechender Griff an dieser Position deutlich kleiner und leichter ausgeführt werden, als herkömmliche Griffe. Der Scheibenrahmen ist derjenige Teil der Fahrzeugtür von der Außenseite gesehen, der die Scheibenöffnung definiert und von außen an die Scheibe (wenn sie die Scheibenöffnung schließt) angrenzt.

In einer Ausführungsvariante besteht keine mechanische Verbindung zwischen dem Griff und einer elektrischen Fahrzeugtürverriegelung. Dies hat den Vorteil, dass kein spezieller Bauraum für die Verlegung eines Bowdenzugs vorgesehen werden muss. Stattdessen werden alle Funktionen der Fahrzeugtürverriegelung durch Sensoren abgefragt und in entsprechende motorische Stellbefehle umgesetzt. Damit entfallen mechanische Verbindungshebel, zum Beispiel von einem Außengriff und einem Innengriff zur Fahrzeugtürverriegelung. Zusätzlich verringert dies auch die Montagezeit, da kein Bowdenzug eingehängt werden muss, sondern lediglich Steckverbindungen miteinander verbunden werden müssen.

In einer weiteren Ausgestaltung ist der Aktuator entweder direkt am Griff angebracht oder in diesen integriert. Zusätzlich kann ein Getriebe direkt am Griff oder in diesen integriert sein, so dass der Aktuator kleiner dimensioniert werden kann. Dies verringert den Bauraum für den Griff zusätzlich.

In einer weiteren Ausgestaltung ist der Aktuator vom Griff räumlich getrennt angeordnet und schwenkt den Griff durch Betätigung eines Übertragungselements. Vorzugsweise wird das Übertragungselement linear verfahren. Vorzugsweise ist der Aktuator ein Spindelantrieb mit einer Spindel und Spindelmutter, wobei die Spindel oder die Spindelmutter über ein Schneckengetriebe angetrieben wird. Das Übertragungselement wird dabei entweder mit der Spindel oder der Spindelmutter verbunden. Um beim Verschwenken des Griffs einen Winkelausgleich zwischen dem Griff und dem Übertragungselement zu erreichen, weist das Übertragungselement in der Nähe seiner beiden Stirnseiten jeweils eine Aufnahme auf, welche an dem Griff und an dem Spindelantrieb vorgesehen ist, um das Übertragungselement mit dem Griff und dem Spindelantrieb zu verbinden. Vorzugsweise weist der Griff 2 hierfür mindestens ein Verbindungselement, in Form einer Achse, auf. Dadurch wird eine flüssige Bewegung des Griffs ermöglicht.

In einer weiteren Ausgestaltung kann das Übertragungselement um eine Achse rotieren und dadurch den Griff von einer eingefahrenen Position in eine ausgefahrene Position verschwenken. Vorzugsweise ist das Übertragungselement ein Kegelzahnrad, welches durch den Aktuator angetrieben wird. Weiterhin kann das Übertragungselement ein Zahnrad sein, welches über ein Kegelzahnrad angetrieben wird. Somit kann direkt mit dem Griff ein Kegelzahnrad oder ein Zahnrad verbunden sein, welches von dem Aktuator angetrieben wird und den Griff verschwenkt.

In einer weiteren Ausgestaltung wird der Griff in der eingefahrenen Position so verschwenkt, dass ein äußerer Teil des Griffs die Aussparung in dem Türaußenblech verschließt. Vorzugsweise ist dabei der äußere Teil des Griffs an die umgebenden Konturen der Fahrzeugtür angepasst. Vorzugsweise wird der äußere Teil des Griffs an einen Grundkörper des Griffs angebracht, so dass der äußere Teil des Griffs lediglich an die Außenkontur des Türaußenblechs angepasst werden muss und alle anderen Teile des Griffs gleich bleiben können. Dadurch wird eine modulare Griffeinheit erreicht, welche bei einer Vielzahl von Fahrzeugen eingesetzt werden kann. Vorzugsweise kann der äußere Teil des Griffs aus einem anderen Material bestehen als der Grundkörper des Griffs. So kann beispielsweise der äußere Teil des Griffs aus demselben Material bestehen wie das Türaußenblech, so dass es zu keiner Farbabweichung zwischen dem Türaußenblech und dem Griff bzw. dem äußeren Teil des Griffs kommt.

Der Griff verläuft im Wesentlichen in einer Längsrichtung des Fahrzeugs. Das bedeutet, dass die Haupterstreckungsrichtung des Griffs in Längsrichtung des Fahrzeugs verläuft. Weiterhin ist es auch möglich, dass die Haupterstreckungsrichtung des Griffs in einer vertikalen Richtung oder einer transversalen Richtung des Fahrzeugs verläuft.

In einer weiteren Ausgestaltung verläuft der Griff in der eingefahrenen Position bündig mit einer Fensterschachtabdeckung. Dadurch ist in der eingefahrenen Position keine Unterbrechung in dem Türaußenblech sichtbar und die Aussparung in dem Türaußenblech wird von dem äußeren Teil des Griffs verdeckt, welcher eine Geometrie aufweist, die der Fensterschachtabdeckung entspricht. Beispielsweise kann der Griff dann auch in der Nähe der B-Säule angeordnet sein.

In einer weiteren Ausgestaltung ist in den Griff eine Kamera integriert. Dies ermöglicht es, auf die äußeren Rückspiegel am Fahrzeug zu verzichten. Die Kamera kann somit mindestens einen rückwärtigen Straßenverkehr aufzeichnen. Vorzugsweise ist die Kamera in den Griff so integriert, dass die Kamera um eine Achse schwenken kann, so dass die Kamera einen Totenwinkel ausgleichen kann. Dies erfolgt, indem eine Steuerung die Kamerabilder auswertet, und sobald ein Fahrzeug beispielsweise überholt, die Kamera dem überholenden Fahrzeug so lange folgt, bis das überholende Fahrzeug den Totenwinkel passiert hat.

Zusätzlich kann die Kamera über weitere Sensoren oder Funktionen des Fahrzeugs angesteuert werden. Dazu kann der Griff, bei einer Bewegung des Fahrzeugs, immer in der eingefahrenen Position sein, bis ein Sensor, beispielsweise ein Radarsensor oder Lidar-Sensor, etc., ein herannahendes Fahrzeug detektiert. Sobald ein herannahendes Fahrzeug detektiert wurde, schwenkt der Griff mit der Kamera in die ausgefahrene Position, so dass ein Fahrer den rückwärtigen Verkehr im Rückspiegel erkennen kann.

Weiterhin ist es auch möglich, dass innerhalb des Fahrgastraums des Fahrzeugs eine weitere Kamera angeordnet ist, welche die Augenbewegungen des Fahrers detektiert und diese durch eine Steuerung ausgewertet werden, so dass der Griff mit der Kamera immer dann in die ausgefahrene Position schwenkt und ein Bild des rückwärtigen Verkehrs liefert, wenn der Fahrer in den Rückspiegel schauen will. Dabei bestehen die Rückspiegel beispielsweise aus Displays, welche innerhalb des Fahrzeugs angeordnet sind.

Weiterhin ist es möglich, dass der Griff mit der Kamera immer dann in die ausgefahrene Position schwenkt, wenn der Blinker betätigt wird. Dadurch wird der Griff mit der Kamera nur in die ausgefahrene Position geschwenkt, wenn beispielsweise der Fahrer über Gefahren informiert werden muss oder der Fahrer den rückwärtigen Verkehr betrachten will. In allen anderen Fällen können sich der Griff und die Kamera in der eingefahrenen Position befinden und verringern dadurch den Luftwiderstand des Fahrzeugs.

In einer weiteren Ausgestaltung kann der Griff an der Fahrzeugtür für den Fahrer mindestens eine weitere Fahrzeugtür oder Klappe öffnen oder schließen. Dies hat den Vorteil, dass nicht an allen Fahrzeugtüren oder Klappen entsprechende Griffe vorgesehen werden müssen. Zusätzlich können von einem Punkt aus mehrere Fahrzeugtüren und/oder Klappen bedient werden. Beispielsweise können nur an den vorderen Türen, also an der Beifahrertür und der Fahrertür, Griffe vorgesehen sein. Mit diesen Griffen können beispielsweise die hinteren Türen, eine Kofferraumklappe, eine Tankkappe oder eine Ladeklappe geöffnet und geschlossen werden.

Insbesondere kann in dem Griff mindestens ein Kraftsensor vorhanden sein, welcher unterschiedliche Betätigungen des Griffs detektieren kann. So kann beispielsweise ein kurzer Zug an dem Griff der Fahrertür die Fahrertür öffnen, ein zweimaliges Ziehen an dem Griff der Fahrertür kann die Fahrertür und mindestens eine weitere Fahrzeugtür öffnen und ein langes Ziehen an dem Griff der Fahrertür nur eine weitere Fahrzeugtür öffnen, wobei die Fahrertür verschlossen bleibt. Ebenfalls ist es möglich, dass die Steuerung es ermöglicht, einen Selbstlernmodus zu aktivieren, und der Bediener kann selber entscheiden, welche Betätigungssequenz für die jeweilige Fahrzeugtür hinterlegt werden soll, und für welche Funktion.

Vorzugsweise ist in dem Griff mindestens ein Sensor angeordnet, um einen Bedienerwunsch zu detektieren. Beispielsweise kann der mindestens eine Sensor ein Kraftsensor, insbesondere ein Dehnungsmesstreifen sein, ein kapazitiver Sensor und/oder ein NFC-Sensor sein. Weiterhin kann der Griff eine Beleuchtung aufweisen und/oder ein Modul für eine haptische Rückmeldung aufweisen, um beispielsweise eine Eingabe eines Bedieners haptisch zu bestätigen.

Die Erfindung wird nachfolgend anhand von Ausführungsbeispielen mit Bezug auf die beigefügten Figuren näher beschrieben. In den Figuren zeigen:
Figur 1 eine schematische Ansicht eines Griffs in der eingefahrenen Position;
Figur 2 eine schematische Ansicht eines Griffs in der ausgefahrenen Position;
Figur 3 eine Ansicht eines Aktuators in einer eingefahrenen Position;
Figur 4 eine Ansicht eines Aktuators in einer ausgefahrenen Position;
Figur 5 eine Ansicht eines Aktuators in einer eingefahrenen Position;
Figur 6 einen Schnitt durch die Fahrzeugtür;
Figur 7 eine Ansicht eines Aktuators in einer ausgefahrenen Position;
Figur 8 einen Türgriff in der ausgefahrenen Position;
Figur 9 einen Schnitt durch eine Fahrzeugtür;
Figur 10 einen Schnitt durch eine Fahrzeugtür;
Figur 11 eine flexible Leiterplatte;
Figur 12 einen Schnitt durch eine flexible Leiterplatte.

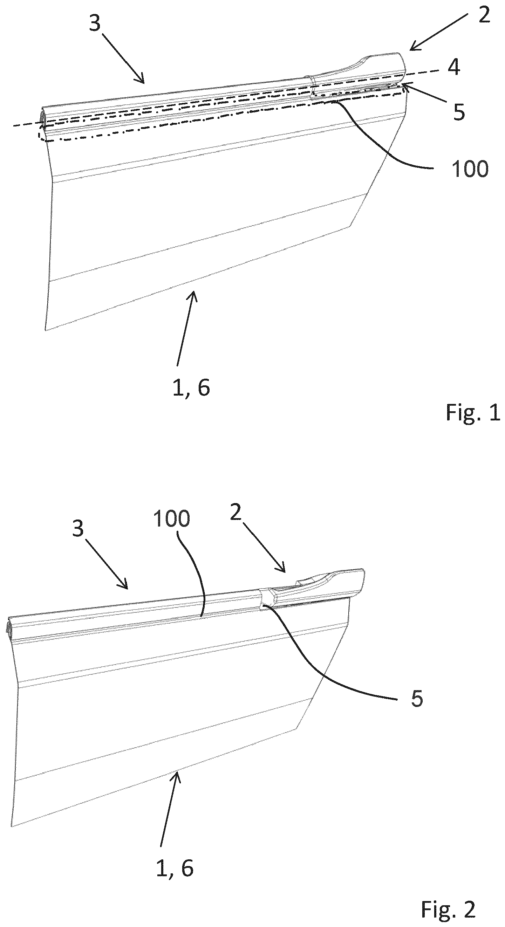

Figur 1 zeigt eine Fahrzeugtür 1 mit einem Griff 2, welcher sich in einer eingefahrenen Position befindet und so konfiguriert ist, dass er um eine Achse 4 schwenken kann, welche im Wesentlichen in einer Längsrichtung des Fahrzeugs verläuft. Es ist nur ein Teil der Fahrzeugtür gezeigt, denn der Teil eines Scheibenrahmens 100, der vertikal aufwärts verläuft, und der obere, horizontale Teil des Scheibenrahmens 100 sind nicht dargestellt, ebenso wenig wie das vordere Ende der Fahrzeugtür mit dem Scharnier.

Das Türaußenblech weist eine Aussparung 5 für den Griff 2 auf. Genauer gesagt hat der Scheibenrahmen 100, also der Teil der Fahrzeugtür (von der Außenseite gesehen), der die Scheibenöffnung definiert und von außen an die geschlossene Scheibe angrenzt, die Aussparung 5.

Der Griff 2 kann durch einen Aktuator 7 in eine ausgefahrene Position oder in eine eingefahrene Position schwenken. Die Aussparung 5 ist in einem Bereich eines Scheibenrahmens 100 angeordnet und der Griff 2 in der Aussparung 5 aufgenommen. In der eingefahrenen Position ist der Griff 2 mindestens teilweise hinter das Türaußenblech geschwenkt. Der Griff 2 ist in der eingefahrenen Position bündig mit einer Fensterschachtabdeckung 3, wodurch keine Unterbrechung in dem Türaußenblech 6 sichtbar und die Aussparung 5 in dem Türaußenblech 6 von einem äußeren Teil 8 des Griffs 2 verdeckt wird, welcher eine Geometrie aufweist, die der Fensterschachtabdeckung 3 entspricht. Da die Fensterschachtabdeckung 3 den Scheibenrahmen 100 teilweise überdeckt, ist der Scheibenrahmen 100 in Figur 1 mit einer strichpunktierten Linie umrahmt. Zu sehen ist, dass im hinteren Ende ein Absatz in dem umrahmten Bereich vorhanden ist, der durch die Aussparung 5 des ansonsten horizontal verlaufenden Scheibenrahmens 100 zustande kommt.

Figur 2 zeigt einen Griff 2 in der ausgefahrenen Position. Dabei ist der Griff so verschwenkt, dass der Griff 2 mindestens mit den Fingern ergriffen werden kann und eine Bedienung ermöglicht. Die Aussparung 5 ist in der ausgefahrenen Stellung von dem Griff 2 verdeckt. Insbesondere befindet sich der Griff 2 in der Nähe der B-Säule.

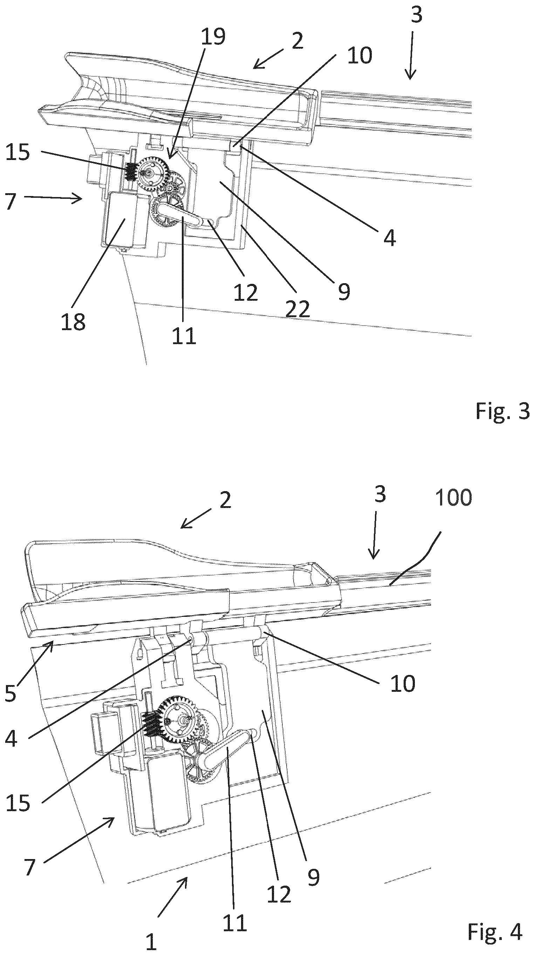

Figur 3 zeigt eine Ansicht eines Aktuators 7 in einer eingefahrenen Position des Griffs 2, wobei der Aktuator auf einer Innenseite der Fahrzeugtür angeordnet ist. Der Aktuator 7 weist einen Motor 18, ein Schneckengetriebe 15 und ein Untersetzungsgetriebe 19 auf. Das Verbindungselement 11 ist an dem Untersetzungsgetriebe 19 angebunden. Hierfür weist das Übertragungselement 9 ein Langloch 12 auf, in welchem sich das Verbindungselement 11 bewegen kann, um das Übertragungselement 9 bzw. den Griff 2 von einer eingefahrenen Position in eine ausgefahrene Position zu verschwenken. Durch das Verbindungselement 11 wird eine lineare Bewegung des Übertragungselements 9 erreicht. Das Verbindungselement 11 wird in dem Gehäuse 22 geführt.

Figur 4 zeigt den Aktuator 7 bzw. den Griff 2 in der ausgefahrenen Position.

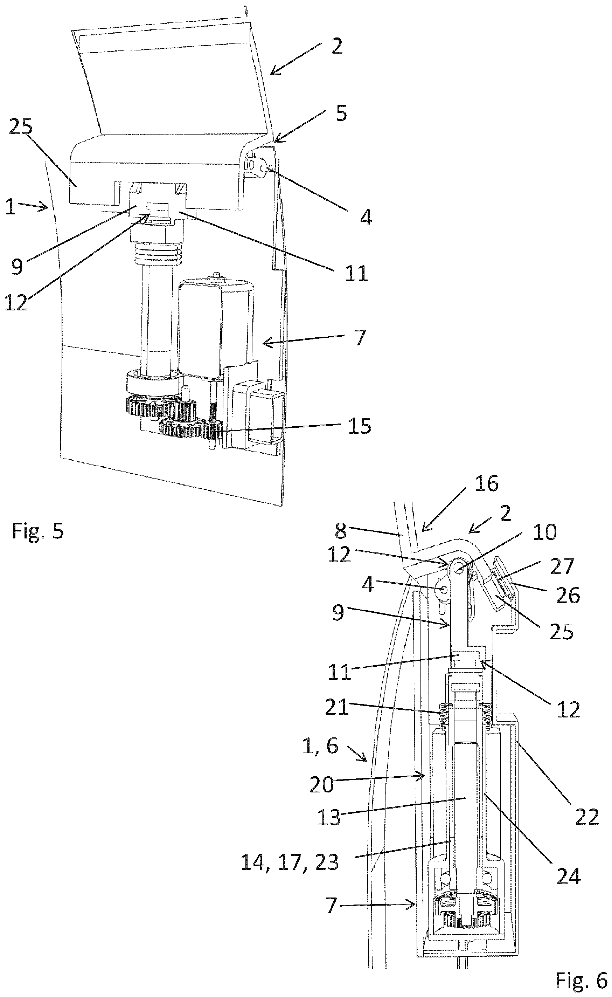

Figur 6 zeigt einen Schnitt durch die Fahrzeugtür 1. Der Aktuator 7 ist von dem Griff 2 räumlich getrennt angeordnet und schwenkt den Griff 2 durch Betätigung eines Übertragungselements 9. Das Übertragungselement 9 ist mit dem Griff 2 und dem Aktuator 7 verbunden. Der Griff 2 weist hierfür mindestens ein Verbindungselement 10, in Form einer Achse, auf. Der Aktuator 7 weist ebenfalls ein Verbindungselement 11 für das Übertragungselement 9 auf. Das Verbindungselement 11 des Aktuators 7 ist dabei durch eine formschlüssige Verbindung mit dem Übertragungselement 9 verbunden. Das Übertragungselement 9 weist in der Nähe seiner beiden Stirnseiten jeweils eine Aufnahme 12 für die Verbindungselemente 10, 11, des Griffs 2 und des Aktuators 7 auf.

Der Griff 2 besteht aus einem Grundkörper 16 und einem äußeren Teil 8, wobei der Grundkörper 16 und der äußere Teil 17 einstückig hergestellt sein können oder zweiteilig ausgebildet sein können. Bei einer zweiteiligen Ausgestaltung des Grundkörpers 16 und des äußeren Teils 8 des Griffs 2, wird der äußere Teil 8 des Griffs 2 an den Grundkörper 16 durch eine kraftschlüssige Verbindung angebracht, wie beispielsweise Clips oder Verrastungen.

Der Aktuator 7 ist bevorzugt ein Spindelantrieb 20, welcher aus einer Spindel 13 und einer Spindelmutter 14 besteht, wobei die Spindel 13 oder die Spindelmutter 14 über ein Schneckengetriebe 15 angetrieben wird. Dabei kann die Spindelmutter 14 auch ein Gewinde in einem Rohr 17 sein, wobei das Rohr 17 durch die Spindel 13 eingefahren und ausgefahren wird. Das Übertragungselement 9 wird dabei entweder mit der Spindel 13 oder der Spindelmutter 14 verbunden. Die Aufnahme 12 oder der Griff 2 kann dabei so gelagert sein, dass der Griff 2 gegenüber der Aufnahme 12 verschwenkt werden kann.

Der Aktuator 7 ist unterhalb des Griffs 2 und zwischen dem Türaußenblech 6 und einer inneren Türverkleidung angeordnet. Der Aktuator 7 verfährt das Übertragungselement 9 in einer linearen, nahezu senkrechten Richtung, in Bezug auf die Längsrichtung des Fahrzeugs.

Der Spindelantrieb 20 kann eine Dichtung 21 aufweisen, welche den Spindelantrieb 20 gegen äußere Einflüsse abdichtet. Die Dichtung 21 ist zwischen einem Spindelantriebgehäuse 24 und einem ausfahrbaren Teil 23 des Spindelantriebs 20 angeordnet.

Weiterhin kann der Griff 2 einen Anschlag 25 aufweisen, welcher zu der Seite einer Innenverkleidung der Fahrzeugtür 1 zeigt und insbesondere mit dem Grundkörper 16 des Griffs 2 verbunden ist. Insbesondere sind der Anschlag 25 und der Grundkörper 16 einstückig verbunden. Vorzugsweise weist der Griff 2 einen S-förmigen oder Z-förmigen Querschnitt auf. Dabei zeigt der äußere Teil 8 des Griffs 2 in Richtung einer Außenseite der Fahrzeugtür 1 bzw. in Richtung des Türaußenblechs 6 und der Anschlag 25 zu der Innenseite der Fahrzeugtür 1 bzw. zu einem Innenraum des Fahrzeugs. An dem Gehäuse 22 ist für den Anschlag 25 eine Anschlagsfläche 26 vorhanden, an welcher ein Sensor 27 oder ein Schalter 27 angeordnet ist. In der ausgefahrenen Position des Griffs 2 berührt der Anschlag 25 nicht die Anschlagsfläche 26. Erst wenn ein Bediener an dem Griff 2 zieht, kommt der Anschlag 25 mit der Anschlagfläche 26 bzw. mit dem Sensor 27 oder dem Schalter 27 in Berührung und löst ein Sensorsignal oder ein Schaltersignal aus, welches die Fahrzeugtür 1 entriegelt und ein Öffnen ermöglicht. Beispielsweise ist der Sensor 27 ein Dehnungsmessstreifen 27, ein kapazitiver Sensor 27 oder ein induktiver Sensor 27. Weiterhin ist es auch möglich, dass der Sensor 27 nur eine Annährung des Anschlags 25 an die Anschlagsfläche 26 detektiert. Somit kann auch eine berührungslose Detektion des Anschlags 25 erfolgen. Dafür kann beispielsweise an dem Anschlag 25 ein Metall aufgebracht sein, welches von dem Sensor 27 detektiert wird.

In der eingefahrenen Position ist der Griff 2 so verschwenkt, dass ein äußerer Teil 8 des Griffs 2 die Aussparung 5 in dem Türaußenblech 6 verschließt. Dabei ist der äußere Teil 8 des Griffs 2 an die umgebenden Konturen der Fahrzeugtür 1 angepasst. Weiterhin ist es auch möglich, dass der Griff 2 vollständig zwischen dem Türaußenblech 6 und der inneren Türverkleidung verschwenkt wird und eine zusätzliche Klappe die Aussparung in dem Türaußenblech verschließt. Dazu ist eine Klappe auf der Innenseite des Türaußenblechs geführt angebracht, so dass bei der ausgefahrenen Position des Griffs 2, die Klappe im nicht sichtbaren Bereich des Türaußenblechs angeordnet ist. An einer Innenseite des Türaußenblechs sind Führungsschienen für die Klappe angeordnet. Somit verlaufen die Führungsschienen für die Klappe von außen unsichtbar im Fahrzeug. Dadurch sind die Führungsschienen vor äußeren Einflüssen geschützt. Die Klappe verfährt senkrecht zu einer Längsrichtung des Fahrzeugs.

Die Klappe schließt in einer ersten Stellung bündig mit einer Außenseite des Türaußenblechs ab, welche der eingefahrenen Position des Griffs 2 entspricht. Weiterhin ist die Klappe in einer zweiten Stellung mindestens teilweise, insbesondere vollständig, hinter das Türaußenblech verfahren, welche der ausgefahrenen Position des Griffs 2 entspricht. Somit liegen in der zweiten Stellung die Außenseite der Klappe und die Innenseite des Türaußenblechs gegenüber. Dadurch kann die Klappe nicht gegen das Fahrzeug kommen und Beschädigungen, wie beispielsweise Kratzer oder Beulen, verursachen, wenn eine Person gegen die Klappe stößt. Weiterhin ist auch ein Abbrechen der Klappe ausgeschlossen.

Die Klappe wird durch einen Aktuator verfahren, wobei die Führungsschienen Nuten aufweisen, welche parallel zueinander angeordnet sind, wobei die offenen Seiten der Nuten gegenüberliegend angeordnet sind. An der Klappe sind Zapfen angeordnet, welche in die Nuten der Führungsschienen eingreifen. Vorzugsweise sind die Zapfen einteilig mit der Klappe verbunden und stehen seitlich über die Klappe heraus. Bevorzugt weist die Klappe mindestens zwei Zapfen auf.

An mindestens einer Führungsschiene ist mindestens ein Sensor angeordnet. Bevorzugt kann der mindestens eine Sensor in der verschlossenen Stellung der Klappe in der Nähe der Zapfen der Klappe angeordnet sein.

Um die Klappe zu öffnen bzw. um den Griff 2 von der eingefahrenen Position in die ausgefahrene Position zu verschwenken, kann vorgesehen sein, dass ein bestimmter Druck auf die Klappe ausgeübt werden muss und ein definierter Schwellwert überschritten werden muss, damit die Klappe von einer ersten Stellung in eine zweite Stellung verfahren wird, und um den Griff von der eingefahrenen Position in die ausgefahrene Position zu verschwenken. Alternativ kann dies auch durch eine Fernbedienung erfolgen.

Um den Griff von der ausgefahrenen Position in die eingefahrene Position zu verschwenken kann dies automatisch nach einem definierten Zeitraum erfolgen, durch ein Bewegungsmuster, wie beispielsweise ein Überstreichen des Griffs, durch Öffnen der Tür, durch Starten eines Motors oder durch Verschließen des Fahrzeugs.

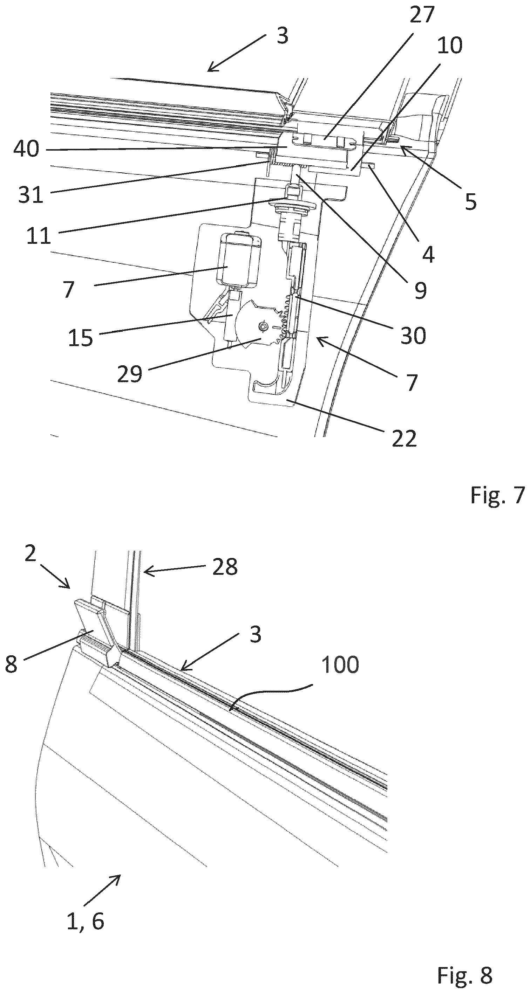

Die Figuren 7 und 8 zeigen einen Griff 2, welcher in der Nähe einer B-Säule 28 angeordnet ist. Der Griff ist in der eingefahrenen Position bündig mit der B-Säule 28 und der Fensterschachtabdeckung 3. In der ausgefahrenen Position ist der Griff 2 in eine Betätigungsposition geschwenkt, in welcher der Griff 2 durch einen Bediener ergriffen werden kann.

Der Mechanismus zum Verschwenken des Griffs 2 besteht aus einem Aktuator 7 mit einem Schneckengetriebe 15 und einem Zahnrad 29 oder einem Untersetzungsgetriebe 19, wobei das Zahnrad 29 oder das Untersetzungsgetriebe 19 durch das Schneckengetriebe 7 angetrieben wird. Das Zahnrad 29 treibt eine Zahnstange 30 an, welche über ein Verbindungselement 11 mit dem Übertragungselement 9 verbunden ist. Das Übertragungselement 9, in Form eines Pins, schwenkt den Griff 2 von einer eingefahrenen Position in eine ausgefahrene Position. Dafür weist der Griff 2 eine Anschlagsfläche 40 auf, die mit dem Übertragungselement 9 verbunden ist oder mit dem Übertragungselement 9 in Kontakt steht. An der Anschlagsfläche 40 des Griffs 2 können Sensoren 27 angeordnet sein, welche eine Betätigung des Griffs 2 durch einen Bediener detektieren. Für das Zurückschwenken des Griffs 2 in die eingefahrene Position, weist der Griff ein Rückstellelement 31 in Form einer Feder 31 auf. Das Rückstellelement 31 ist auf der Achse 4 des Griffs 2 angeordnet und wird beim Verschwenken des Griffs 2 in die ausgefahrene Position vorgespannt. Sobald der Aktuator 7 wieder in die eingefahrene Position verfährt wird der Griff 2 mindestens unterstützt durch das Rückstellelement 31 in die eingefahrene Position verschwenkt.

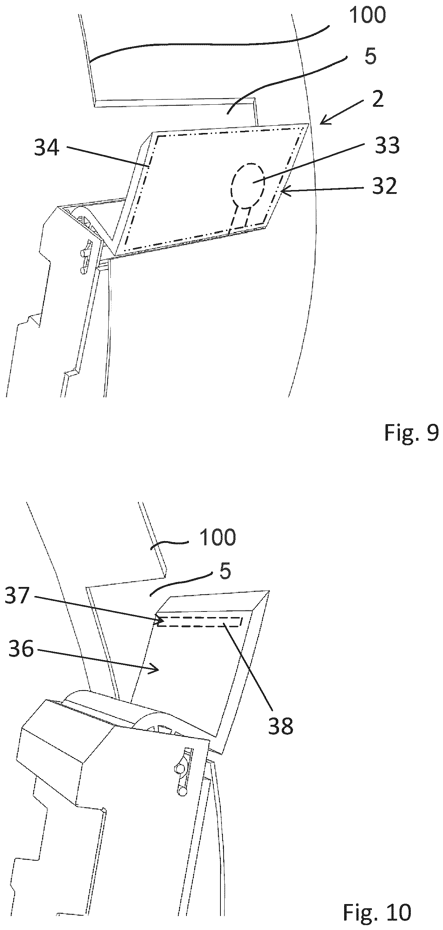

Gemäß den Figuren 9 und 10 kann in dem Griff 2 mindestens ein Sensor 32 angeordnet sein, um einen Bedienerwunsch zu detektieren. Beispielsweise kann der mindestens eine Sensor 32 ein Kraftsensor, insbesondere ein Dehnungsmesstreifen sein, ein kapazitiver Sensor 33 und/oder ein NFC-Sensor 34 mit mindestens einer NFC-Antenne sein. Vorzugsweise ist der Sensor 32 in dem äußeren Teil 8 des Griffs 2 angeordnet und/oder in dem Grundkörper 16 des Griffs 2. Insbesondere kann der äußere Teil 8 des Griffs 2 auch eine Abdeckung sein, welche den Grundkörper 16 des Griffs 2 mindestens teilweise umschließt.

Der mindestens eine Sensor 32 ist insbesondere auf einer flexiblen Leiterplatte 35 angeordnet. Vorzugsweise sind mehrere Sensoren 32 auf der flexiblen Leiterplatte 35 angeordnet, insbesondere mindestens zwei. Der erste kapazitive Sensor 33 und der NFC-Sensor 34 sind so angeordnet, dass ein Bediener in der eingefahrenen Position des Griffs 2 den mindestens einen Sensor 32 aktivieren kann, beispielsweise durch Annäherung an den Griff 2 oder durch Betätigung des Griffs 2. Somit ist mindestens ein Sensor 32 im Bereich des äußeren Teils 8 des Griffs 2 angeordnet, insbesondere ist der Sensor 32 so orientiert, dass der Detektionsbereich des Sensors 2 zu einer Außenseite zeigt.

Zusätzlich kann ein weiterer Sensor 37 auf der flexiblen Leiterplatte 35 angeordnet sein. Im eingebauten Zustand der flexiblen Leiterplatte 35 liegt der Sensor 37 gegenüber dem Sensor 32. Somit ist der Detektionsbereich des Sensors 37 in Richtung eines Innenraums des Fahrzeugs orientiert. Dadurch ist der Sensor 37 auf einer Innenseite 36 des Griffs 2 angeordnet. So ist es möglich, dass in der ausgefahrenen Position des Griffs 2 ein Eingreifen eines Bedieners detektiert werden kann, bzw. die Finger, welche den Griff 2 greifen. Vorzugsweise ist dafür ein zweiter kapazitiver Sensor 38 vorgesehen.

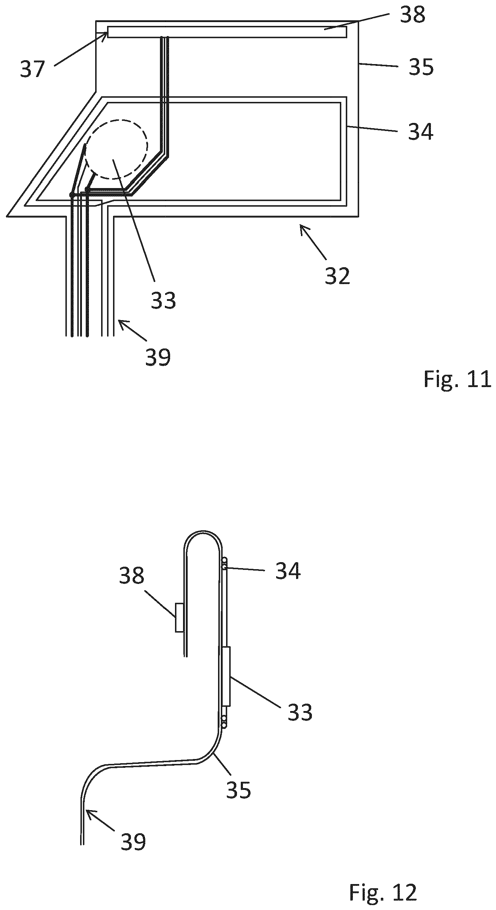

Figur 11 zeigt eine flexible Leiterplatte 35 mit den darauf angeordneten Sensoren 32, 33, 34, 37, 38. Die NFC-Antenne des NFC-Sensors 34 ist auf der flexiblen Leiterplatte 35 oder in dieser verlegt, um die Fläche zu vergrößern, und wird vorzugweise impedanzgesteuert. Die kapazitiven Sensoren 33, 38 sind als Kupferplatten in der flexiblen Leiterplatte 35 integriert.

Die flexible Leiterplatte 35 ist über eine Verbindung 39 mit einer nicht gezeigten Steuerung verbunden. Dies führt zu einer kostengünstigen Lösung bei geringstem Einsatz von Verbindungsmaterial (z. B. Drähte, Stecker, etc.). Bei der Verwendung einer flexiblen Leiterplatte 35 ist es möglich, die Form der flexiblen Leiterplatte 35 an die Form des Griffs 2 anzupassen. Dadurch kann der Griff 2 eine sehr kompakte Form aufweisen.

Figur 12 zeigt einen Schnitt durch eine flexible Leiterplatte 35, wobei die flexible Leiterplatte 35 an die Form eines Griffs 2 angepasst ist. Hierbei ist zu erkennen, dass der erste kapazitive Sensor 33 und der NFC-Sensor 34 auf einer Seite des Griffs 2 angeordnet sind und der zweite kapazitive Sensor 38 auf einer gegenüberliegenden Seite des Griffs 2 angeordnet ist.

Vorzugsweise wird die flexible Leiterplatte 35 mit den Sensoren 32, 33, 34, 37, 38 mit dem Griff 2, insbesondere mit dem äußeren Teil 8 des Griffs 2, verbunden und anschließend umspritzt.

### Bezugszeichenliste:

- 1: Fahrzeugtür
- 2: Griff
- 3: Fensterschachtabdeckung
- 4: Achse
- 5: Aussparung
- 6: Türaußenblech
- 7: Aktuator
- 8: äußere Teil des Griffs
- 9: Übertragungselement
- 10: Verbindungselemente Griff
- 11: Verbindungselemente Aktuator
- 12: Aufnahme Übertragungselement
- 13: Spindel
- 14: Spindelmutter
- 15: Getriebe Motor
- 16: Grundkörper Griff
- 17: Rohr Spindelmutter
- 18: Motor
- 19: Untersetzungsgetriebe
- 20: Spindelantrieb
- 21: Dichtung Spindelantrieb
- 22: Gehäuse
- 23: ausfahrbarer Teil des Spindelantriebs
- 24: Spindelantriebsgehäuse
- 25: Anschlag Griff
- 26: Anschlagsfläche Gehäuse
- 27: Sensor / Schalter
- 28: B-Säule
- 29: Zahnrad
- 30: Zahnstange
- 31: Rückstellelement
- 32: Sensor
- 33: erster kapazitiver Sensor
- 34: NFC-Sensor
- 35: flexible Leiterplatte
- 36: Innenseite des Griffs
- 37: weiterer Sensor
- 38: zweiter kapazitiver Sensor
- 39: Verbindung Leiterplatte
- 40: Anschlagsfläche Griff
- 100: Scheibenrahmen

## Patentansprüche

1. Fahrzeugtür (1), umfassend eine zu betätigende Fahrzeugtürverriegelung, welche mit einem Griff (2) zusammenwirkt, der so konfiguriert ist, dass er um eine Achse (4) schwenkt, welche im Wesentlichen in einer Längsrichtung des Fahrzeugs verläuft, sowie eine Aussparung (5) in einem Türaußenblech (6) für den Griff (2), wobei der Griff (2) durch einen Aktuator (7) in eine ausgefahrene Position oder in eine eingefahrene Position schwenkt,
**dadurch gekennzeichnet, dass**
die Aussparung (5) in einem Bereich eines Scheibenrahmens (100) angeordnet ist und der Griff (2) in der Aussparung (5) aufgenommen ist, wobei der Griff (2) in der eingezogenen Position mindestens teilweise hinter das Türaußenblech (6) schwenkt.

2. Fahrzeugtür (1) nach Anspruch 1, **dadurch gekennzeichnet, dass** keine mechanische Verbindung zwischen dem Griff (2) und der elektrischen Fahrzeugtürverriegelung besteht.

3. Fahrzeugtür (1) nach Anspruch 1 oder 2, **dadurch gekennzeichnet, dass** der Aktuator (7) entweder direkt am Griff (2) angebracht oder in diesen integriert ist.

4. Fahrzeugtür (1) nach einem der Ansprüche 1 oder 2, **dadurch gekennzeichnet, dass** der Aktuator (7) vom Griff (2) räumlich getrennt angeordnet ist und den Griff (2) durch Betätigung eines Übertragungselements (9) verschwenkt.

5. Fahrzeugtür (1) nach Anspruch 4, **dadurch gekennzeichnet, dass** das Übertragungselement (9) um eine Achse rotiert.

6. Fahrzeugtür (1) nach Anspruch 4, **dadurch gekennzeichnet, dass** das Übertragungselement (9) linear verfahren wird.

7. Fahrzeugtür (1) nach einem der vorherigen Ansprüche, **dadurch gekennzeichnet, dass** der Aktuator (7) einen Spindelantrieb (20) aufweist.

8. Fahrzeugtür (1) nach einem der vorherigen Ansprüche, **dadurch gekennzeichnet, dass** der Griff (2) in der eingefahrenen Position so verschwenkt wird, dass ein äußerer Teil (8) des Griffs (2) die Aussparung (5) in dem Türaußenblech (6) verschließt.

9. Fahrzeugtür (1) nach Anspruch 5, **dadurch gekennzeichnet, dass** der äußere Teil (8) des Griffs (2) an die umgebenden Konturen der Fahrzeugtür (1) angepasst ist.

10. Fahrzeugtür (1) nach einem der vorherigen Ansprüche, **dadurch gekennzeichnet, dass** der Griff (2) im Wesentlichen in einer Längsrichtung des Fahrzeugs verläuft.

11. Fahrzeugtür (1) nach einem der Ansprüche 1 bis 8, **dadurch gekennzeichnet, dass** der Griff (2) im Wesentlichen in einer vertikalen Richtung des Fahrzeugs verläuft.

12. Fahrzeugtür (1) nach einem der Ansprüche 1 bis 8, **dadurch gekennzeichnet, dass** der Griff (2) im Wesentlichen in einer transversalen Richtung des Fahrzeugs verläuft.

13. Fahrzeugtür (1) nach einem der vorherigen Ansprüche, **dadurch gekennzeichnet, dass** der Griff (2) in der eingefahrenen Position bündig mit einer Fensterschachtabdeckung (3) verläuft.

14. Fahrzeugtür (1) nach einem der vorherigen Ansprüche, **dadurch gekennzeichnet, dass** in den Griff (2) eine Kamera integriert ist.

15. Fahrzeugtür (1) nach Anspruch 11, **dadurch gekennzeichnet, dass** die Kamera mindestens einen rückwärtigen Straßenverkehr aufzeichnet.

16. Fahrzeugtür (1) nach einem der vorherigen Ansprüche, **dadurch gekennzeichnet, dass** der Griff (2) an der Fahrzeugtür (1) für den Fahrer mindestens eine weitere Fahrzeugtür (1) oder Klappe öffnen oder schließen kann.
